# EUROPÄISCHE PATENTANMELDUNG

(11) **EP 2 708 783 A1**
(43) Veröffentlichungstag der Anmeldung: **19.03.2014**
(21) Anmeldenummer: 13173464.2
(22) Anmeldetag: 24.06.2013
(51) Int. Cl.: F16K 5/06, F16K 31/05

(54) **Bordabsperrventil zum Absperren und Öffnen einer Leitungsdurchführung durch eine druckbeaufschlagte Wand eines Unterseeboots**

(30) Priorität: 13.09.2012 DE 102012216309
(71) Anmelder: ThyssenKrupp Marine Systems GmbH, 24143 Kiel (DE)
(72) Erfinder: Toobe, Dipl.-Ing. Werner, 24159 Kiel (DE); Riegel, Dipl.-Ing. Peter, 23568 Lübeck (DE); Nitsch, Gunnar, 24114 Kiel (DE); Mundt, Dipl.-Ing. Marco, 24279 Dänischenhagen (DE)
(74) Vertreter: Patentanwälte Vollmann & Hemmer

(57) **Zusammenfassung**

Ein Bordabsperrventil, welches zum Absperren und Öffnen einer Leitungsdurchführung (48, 76) durch eine druckbeaufschlagte Wandung (2, 22, 74) eines Unterseeboots dient, zeichnet sich dadurch aus, dass es als Winkelkugelhahn (36, 36') ausgebildet ist. (Fig. 1)

## Beschreibung

Die Erfindung betrifft ein Bordabsperrventil zum Absperren und Öffnen einer Leitungsdurchführung durch eine druckbeaufschlagte Wand eines Unterseeboots mit den im Oberbegriff von Anspruch 1 angegebenen Merkmalen.

Unterseeboote weisen üblicherweise durch die Wandung ihres Druckkörpers geführte Leitungsdurchführungen auf, über die außerhalb des Druckkörpers angeordnete hydraulisch oder pneumatisch betätigte Bootseinrichtungen mit dem jeweiligen Druckmedium versorgt werden. Um bei Nichtbetrieb dieser Bootseinrichtungen zu verhindern, dass Seewasser in das Innere des Druckkörpers eindringt, sind im Inneren des Druckkörpers auch als Bordabsperrung bezeichnete Bordabsperrventile angeordnet, die diese Leitungsdurchführungen bei Bedarf druckdicht verschließen.

Militärische Unterseeboote weisen zudem in der Regel durch die Wandung des Druckkörpers geführte Waffenrohre auf, bei denen ein innerhalb des Druckkörpers angeordneter Abschnitt des Waffenrohres bei nach außen geöffnetem Mündungsdeckel ebenfalls von dem außerhalb des Unterseeboots herrschenden Umgebungsdruck beaufschlagt wird. An diesem im Inneren des Druckkörpers angeordneten Abschnitt sind an dem Waffenrohr üblicherweise diverse Leitungen angeschlossen, die beispielsweise zum Be- und Entwässern des Waffenrohres oder zur Einleitung eines Ausstoßmediums in das Waffenrohr vorgesehen sein können. Die zum Be- und Entwässern sowie zum Einleiten des Ausstoßmediums erforderlichen Armaturen, bei denen es sich üblicherweise um manuell zu betätigende Ventile handelt, sind unmittelbar an dem jeweiligen Waffenrohr angeordnet und dienen bei geöffnetem Mündungsdeckel des Waffenrohrs auch als Bordabsperrung. Entsprechend druckfest müssen diese Armaturen ausgebildet sein, was eine vergleichsweise große Bauform der Armaturen erforderlich macht. Korrespondierend ist auch der von den Armaturen veranschlagte Einbauraum sehr groß, wobei zudem auch zu berücksichtigen ist, dass im Bereich des Waffenrohres ein ausreichend großer Raum zum Betätigen der an dem Waffenrohr angeordneten Armaturen freizuhalten ist. Dies erweist sich insbesondere bei einem im Bereich des Bugs angeordneten Waffenrohrsatz als nachteilig, bei dem mehrere Waffenrohre eng nebeneinander angeordnet sind. Ein weiterer Nachteil der als Bordabsperrungen verwendeten Armaturen besteht darin, dass eine Demontage oder Wartung dieser Armaturen aufgrund ihrer gleichzeitigen Funktion als Bordabsperrung oftmals gar nicht oder nur mit erheblichem Aufwand möglich ist.

Vor diesem Hintergrund liegt der Erfindung die Aufgabe zugrunde, ein Bordabsperrventil zur Verfügung zu stellen, mit dem eine durch eine druckbeaufschlagte Wandung eines Unterseeboots führende Leitungsdurchführung bei Bedarf zuverlässig verschlossen werden kann, wobei das Bordabsperrventil möglichst kompakt ausgebildet sein soll.

Diese Aufgabe wird durch ein Bordabsperrventil mit den in Anspruch 1 angegebenen Merkmalen gelöst. Vorteilhafte Weiterbildungen dieses Bordabsperrventils ergeben sich aus den Unteransprüchen, der nachfolgenden Beschreibung sowie der Zeichnung. Hierbei können gemäß der Erfindung die in den Unteransprüchen angegebenen Merkmale für sich, aber auch in geeigneter Kombination die erfindungsgemäße Lösung nach Anspruch 1 weiter ausgestalten.

Das erfindungsgemäße Bordabsperrventil ist zur direkten Anordnung an einer durch eine druckbeaufschlagte Wandung eines Unterseeboots führende Leitungsdurchführung vorgesehen. Bei dieser Wandung kann es sich um die Wandung des Druckkörpers des Unterseeboots oder um die Wandung eines Waffenrohres oder jeder anderen durch den Druckkörper geführten Schleuse des Unterseeboots handeln, auf der in gewissen Situationen der Umgebungsdruck des Unterseeboots lastet.

Gemäß der Erfindung ist das Bordabsperrventil als ein Winkelkugelhahn ausgebildet. Dementsprechend handelt es sich bei dem Bordabsperrventil um ein Absperrventil mit einer Kugel als Absperrkörper, welcher so gedreht werden kann, dass ein in oder an der Kugel ausgebildeter Strömungspfad Teil des gesamten Strömungspfades durch das Absperrventil bildet oder diesen Strömungspfad versperrt, wobei die beiden an den Absperrkörper angrenzenden Abschnitte des Strömungspfades durch das Absperrventil nicht in direkter Verlängerung zueinander ausgerichtet sind, sondern zueinander abgewinkelt sind.

Besonders dann, wenn diese Abschnitte, wie es bevorzugt vorgesehen ist, in einem Winkel von 90° zueinander ausgerichtet sind, ermöglicht dies eine sehr kompakte Ausgestaltung des Bordabsperrventils, was vor allem im Hinblick auf eine Verwendung des erfindungsgemäßen Absperrventils an einem Waffenrohr eines Waffenrohrsatzes mit mehreren eng nebeneinander angeordneten Waffenrohren wegen des dort vorhandenen geringen Raumangebots von Vorteil ist. Die dortige Verwendung des erfindungsgemäßen Bordabsperrventils hat den weiteren Vorteil, dass die dort bislang erforderlichen Armaturen von dem Waffenrohr entfernt an geeigneterer Stelle in dem Unterseeboot an einer an das Bordabsperrventil angeschlossenen Leitung angeordnet sein können, wo für das Bedienpersonal mehr Raum zur Verfügung steht. Die Abwinklung des durch das Bordabsperrventil führenden Strömungspfades kann in einem der beiden an den Absperrkörper des Bordabsperrventils angrenzenden Abschnitte des Strömungspfades durch entsprechende Formung des Strömungspfades erfolgen. Besonders vorteilhaft ist aber ein durch den Absperrkörper des Winkelkugelhahns führender Strömungspfad abgewinkelt ausgebildet. Demzufolge weist der Absperrkörper zwei Abschnitte auf, die in einem Winkel ungleich 180° und vorzugsweise in einem Winkel von 90° unter Bildung einer Strömungsverbindung miteinander von der Außenseite des Absperrkörpers aus aufeinander zu verlaufen. Durch diese Ausbildung der Abwinklung des Strömungskanals innerhalb des Absperrkörpers des erfindungsgemäßen Bordabsperrventils lässt sich dessen Baugröße nochmals erheblich reduzieren.

Zweckmäßigerweise ist bei einer abgewinkelten Ausgestaltung des Strömungspfades durch den Absperrkörper dort die Abwinklung des Strömungspfades abgerundet ausgebildet. Hierunter ist eine Ausgestaltung zu verstehen, bei der in einem Übergangsbereich, in dem die vorzugsweise gerade ausgebildeten Abschnitte des Strömungspfades in dem Absperrkörper aufeinander treffen, abgerundet, also ohne Bildung von Ecken und Kanten ineinander übergehen. Durch diese Maßnahme lässt sich ein vergleichsweise geringer Strömungswiderstand innerhalb des Absperrkörpers und damit innerhalb des Bordabsperrventils erzielen, wodurch ein möglichst geräuscharmer Durchfluss durch den Absperrkörper und das Bordabsperrventil gewährleistet wird. Eine weitere Vorkehrung, einen geringen Strömungswiderstand und einen geräuscharmen Durchfluss durch das Bordabsperrventil zu bewirken, besteht darin, dass der Querschnitt des Strömungspfades durch den Absperrkörpervorzugsweise im Wesentlichen dem Querschnitt der an dem Absperrkörper angrenzenden Abschnitte des Strömungspfades durch das Bordabsperrventil entspricht, wobei dieser Querschnitt vorzugsweise demjenigen, der von dem Bordabsperrventil zu verschließenden Leitungsdurchführung durch die druckbeaufschlagte Wandung des Unterseeboots entspricht.

Bevorzugt ist zumindest eine wandungsseitig angeordnete Anschlussöffnung des Winkelkugelhahns an einem Flansch ausgebildet. Mit diesem Flansch ist das erfindungsgemäße Bordabsperrventil in einfacher Weise an einem Randbereich der mit dem Winkelkugelhahn zu verschließenden Leitungsdurchführung an der Wandung mittels Schraubverbindungen befestigbar. Zum Anschluss einer Rohrleitung an der zweiten Anschlussöffnung des Winkelkugelhahns kann an dieser Anschlussöffnung ebenfalls ein Flansch ausgebildet sein, der mit einem an dem Ende der Rohrleitung angeordneten Flansch verschraubbar ist. Es sei darauf hingewiesen, dass die Verbindung der zweiten Anschlussöffnung des Winkelkugelhahns mit einer Rohrleitung auch dadurch erfolgen kann, dass die Rohrleitung bei entsprechender Ausgestaltung des Bordabsperrventils in die zweite Anschlussöffnung einschraubbar ist. Darüber hinaus kann die Verbindung des Bordabsperrventils mit der Wandung, an der die zu verschließende Leitungsdurchführung ausgebildet ist, auch mittels einer Schweißverbindung erfolgen.

Der Winkelkugelhahn ist vorteilhafterweise motorisch betätigbar ausgebildet. D. h. der Absperrkörper des Winkelkugelhahns ist drehbeweglich mit einer Antriebswelle eines motorischen Antriebs verbunden, welcher den Absperrkörper von einer Öffnungsstellung des Bordabsperrventils in dessen Schließstellung und umgekehrt bewegt. Die Verwendung eines Motors, der elektrisch, pneumatisch oder hydraulisch betätigt ausgebildet sein kann, ist zum Öffnen und Schließen des Bordabsperrventils sinnvoll. Darüber hinaus ermöglicht es die Verwendung eines motorischen Antriebs auch, das Bordabsperrventil gegebenenfalls fernbedient von einem von dem Bordabsperrventil beabstandeten Ort innerhalb des Unterseeboots aus zu betätigen.

Bei einer motorisch betätigten Ausgestaltung des Winkelkugelhahns weist dessen Absperrkörper vorzugsweise einen Wellenzapfen auf, über welchen der Absperrkörper mit dem motorischen Antrieb wirkungsverbunden ist. Zweckmäßigerweise ist der Wellenzapfen derart an den Absperrkörper angeordnet, dass seine Mittelachse mit der Drehachse des Absperrkörpers übereinstimmt, um die der Absperrkörper in eine Schließ- und eine Öffnungsstellung des Winkelkugelhahns drehbar ist. Der Wellenzapfen ist bevorzugt so lang ausgebildet, dass er aus einem Gehäuse des Winkelkugelhahns außen herausragt, wobei in diesem Fall an dem Gehäuse typischerweise eine Öffnung ausgebildet ist, durch die der Wellenzapfen dicht hindurchgeführt ist. Die Verbindung des Wellenzapfens mit einer Antriebswelle des motorischen Antriebs erfolgt dann außerhalb des Winkelkugelhahns. Daneben ist aber auch eine Ausgestaltung denkbar, bei der die Antriebswelle des motorischen Antriebs über eine Öffnung in das Gehäuse des Winkelkugelhahns eingreift und die Verbindung der Antriebswelle mit dem Wellenzapfen des Absperrkörpers innerhalb des Winkelkugelhahns erfolgt.

Um das Bordabsperrventil gegebenenfalls auch bei einem Ausfall des zu dessen Betätigung vorgesehenen motorischen Antriebs in eine Schließ- und eine Öffnungsstellung stellen zu können, kann der Absperrkörper vorteilhaft einen zweiten Wellenzapfen aufweisen, welcher aus dem Winkelkugelhahn herausgeführt ist und über welchen der Absperrkörper mit einem manuellen Betätigungsmittel verbindbar ist. Dieser zweite Wellenzapfen ist zweckmäßigerweise auch derart angeordnet, dass seine Mittelachse mit der Drehachse des Absperrkörpers übereinstimmt, um welche der Absperrkörper in eine Schließ- und eine Öffnungsstellung des Winkelkugelhahns drehbar ist und stimmt demnach vorzugsweise auch mit der Mittelachse des Wellenzapfens überein, über den der Absperrkörper mit dem motorischen Antrieb verbunden ist. Ein aus dem Gehäuse des Winkelkugelhahns herausragendes Ende des zweiten Wellenzapfens kann einen unrunden Querschnitt, vorzugsweise einen viereckigen Querschnitt aufweisen, der eine in Drehrichtung des Wellenzapfens formschlüssige Verbindung mit dem manuellen Betätigungsmittel, bei dem es sich beispielsweise um einen Hebel, einen geeigneten Schlüssel oder ein Handrad handeln kann, ermöglicht.

Um den Absperrkörper in dem Gehäuse des Winkelkugelhahns anordnen zu können, muss an dem Gehäuse eine hierfür geeignete Öffnung ausgebildet sein. So kann das Gehäuse an einer Seite offen ausgebildet sein, wobei diese Seite von einer außen daran befestigten Deckplatte verschlossen wird. Bevorzugt ist allerdings eine Ausgestaltung, bei der das Gehäuse zur Aufnahme des Absperrkörpers eine mit einem Gewinde versehende Öffnung aufweist, in welche ein an seiner Außenseite mit einem Gewinde versehener Deckel eingeschraubt ist. Vorteilhaft ragt der in die Öffnung geschraubte Deckel bei dieser Ausgestaltung nicht an der Außenseite des Gehäuses hervor. So dass der Deckel keine Auswirkung auf die Größe des Bordabsperrventils hat. Zweckmäßigerweise greift der Deckel in dessen Achsrichtung derart tief in das Gehäuse ein, dass er in dem Gehäuse den Absperrkörper und die Dicht- und Lagerschalen, auf denen der Absperrkörper drehbeweglich gelagert ist, bei einer definierten Vorspannung festlegt.

Bei einer Ausgestaltung, bei der der Strömungspfad des Winkelkugelhahns zwei in einem Winkel von 90° abgewinkelte Abschnitte aufweist, sind die beiden Abschlussöffnungen des Winkelkugelhahns vorteilhaft an zwei normal zueinander ausgerichteten Seiten des Gehäuses des Winkelkugelhahns ausgebildet. Weiter vorteilhaft ist hierbei eine gemeinsame Mittelachse der beiden an dem Absperrkörper vorgesehenen Wellenzapfen normal zu den Mittelachsen der beiden Anschlussöffnungen ausgerichtet.

Nachfolgend ist die Erfindung anhand von in der Zeichnung dargestellten Ausführungsbeispielen näher erläutert. In der Zeichnung zeigt:
- Fig. 1: in einer schematisch stark vereinfachten Schnittansicht einen bugseitigen Abschnitt eines Unterseeboots,
- Fig. 2: in vergrößerter Darstellung ein Detail A aus Fig. 1,
- Fig. 3: in vergrößerter Darstellung ein in Fig. 2 dargestelltes Bordabsperrventil,
- Fig. 4: das Bordabsperrventil nach Fig. 3 in einer gegenüber Fig. 3 um 90° gedrehten Seitenansicht,
- Fig. 5: ein Bordabsperrventil gemäß einer zweiten Ausgestaltung in einer Seitenansicht und
- Fig. 6: das Bordabsperrventil nach Fig. 5 in einer gegenüber Fig. 5 um 90° gedrehten Schnittansicht.

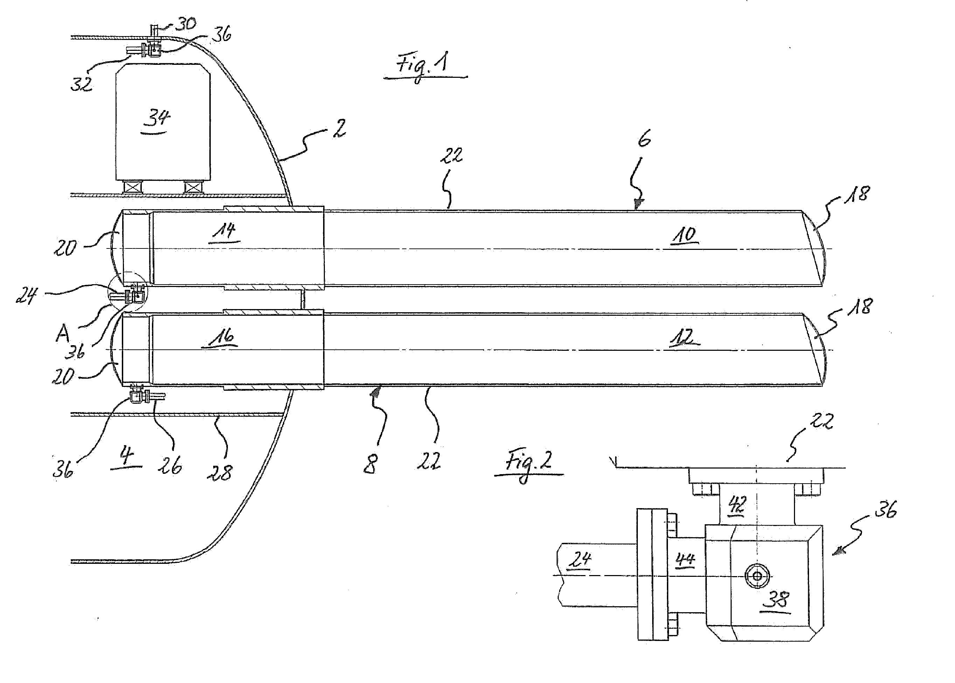

Bei dem in Fig. 1 nur teilweise dargestellten Unterseeboot sind an einem bugseitigen Ende einer Wandung 2, die den Druckkörper 4 des Unterseeboots bildet, zwei Waffenrohre 6 und 8 durch die Wandung 2 hindurchgeführt. Hierbei ist jeweils ein Abschnitt 10 bzw. 12 der Waffenrohre 6 und 8, die zum Ausbringen von Waffen, wie beispielsweise Torpedos nach außerhalb des Unterseeboots dienen, außerhalb des Druckkörpers 4 in einem von einer nicht dargestellten Außenhaut umgebenden, von Wasser durchflutetem Vorschiff des Unterseeboots angeordnet und jeweils ein kürzerer Abschnitt 14 bzw. 16 der Waffenrohre 6 und 8 innerhalb des Druckkörpers 4 angeordnet. An ihrem außerhalb des Druckkörpers gelegenen Ende wird jedes der Waffenrohre 6 und 8 von einem Mündungsdeckel 18 druckdicht verschlossen, der zum Ausbringen einer Waffe aus dem Waffenrohr 6 bzw. 8 in eine das Innere des Waffenrohres 6 bzw. 8 freigebende Stellung verschwenkt werden kann. Das in dem Druckkörper 4 gelegene Ende der beiden Waffenrohre 6 und 8 wird jeweils von einem Bodenverschluss 20 druckdicht verschlossen, der zum Nachladen einer Waffe bei geschlossenem Mündungsdeckel 18 geöffnet werden kann. Bei Tauchfahrt des Unterseeboots wird eine Außenwandung 22 der beiden Waffenrohre 6 und 8 bei geschlossenem Mündungsdeckel 18 in dem außerhalb des Druckkörpers liegenden Abschnitt 10 bzw. 12 wie die Wandung 2 des Druckkörpers 4 an ihrer Außenseite von dem Umgebungsdruck des Unterseeboots beaufschlagt, während bei geöffnetem Mündungsdeckel 18 die Außenwandung 22 in dem innerhalb des Druckkörpers 4 gelegenen Abschnitt 14 bzw. 16 von innerhalb des Waffenrohres 6 bzw. 8 mit dem Umgebungsdruck des Unterseeboots druckbeaufschlagt wird. Bei den Außenwandungen 22 der Waffenrohre 6 und 8 sowie bei der Wandung 2 des Druckkörpers handelt es sich demnach um druckbeaufschlagte Wandungen des Unterseeboots.

Im Inneren des Druckkörpers 4 sind im Bereich des Abschnitts 14 bzw. 16 der Waffenrohre 6 und 8 Leitungen angeschlossen, über die die Waffenrohre 6 und 8 be- oder entwässert werden können oder über die ein Medium zum Ausstoßen einer Waffe aus dem Waffenrohr 6 bzw. 8 in das Waffenrohr 6 bzw. 8 eingeleitet werden kann.

In Fig. 1 ist exemplarisch eine an dem Waffenrohr 6 angeschlossene Leitung 24 und eine an dem Waffenrohr 8 angeschlossene Leitung 26 dargestellt. Es sei aber darauf hingewiesen, dass an jedem der Waffenrohre 6 und 8 gegebenenfalls mehrere Leitungen angeschlossen sein können. Der Anschluss der Leitung 24 an dem Waffenrohr 6 erfolgt im Bereich eines räumlich engen Zwischenraums zwischen dem Waffenrohr 6 und dem Waffenrohr 8, während der Anschluss der Leitung 26 an dem Waffenrohr 8 in einem Bereich erfolgt, der direkt einem Deck 28 des Unterseeboots zugewandt ist und ebenfalls eng begrenzt ist.

An der Oberseite des Druckkörpers 4 ist an der Wandung 2 eine Leitungsdurchführung ausgebildet, an die sich außerhalb des Druckkörpers 4 eine Leitung 30 anschließt. Innerhalb des Druckkörpers 4 ist an der durch die Wandung 2 führenden Leitungsdurchführung eine Leitung 32 angeschlossen, wobei auch hier zum Anschluss der Leitung 32 an die Leitungsdurchführung wegen eines unterhalb der Leitungsdurchführung angeordneten Geräteschranks 34 wenig Raum zur Verfügung steht.

Der Anschluss der Leitungen 24 und 26 an den Waffenrohren 6 und 8 erfolgt jeweils über ein direkt an der Außenwandung 22 der Waffenrohre 6 und 8 angeschlossenes Bordabsperrventil in Form eines Winkelkugelhahns 36, dessen Ausgestaltung insbesondere aus den Fig. 2 bis 4 hervorgeht. Auch zum Anschluss der Leitung 32 der Leitungsdurchführung an der Wandung 2 des Druckkörpers 4, an die sich außerhalb des Druckkörpers 4 die Leitung 30 anschließt, ist ein solcher Winkelkugelhahn 36 vorgesehen.

Dieser Winkelkugelhahn 36 weist ein im Wesentlichen rechteckig ausgebildetes Gehäuse 38 auf, in dem eine Kugel als Absperrkörper 40 des Winkelkugelhahns 36 angeordnet ist. An zwei normal zueinander ausgerichteten Außenseiten des Gehäuses 38 schließen sich an dem Gehäuse 38 jeweils ein Flansch 42 und 44 an. Die beiden in einem Winkel von 90° zueinander versetzt ausgerichteten Flansche 42 und 44 bilden zusammen mit einer an dem Absperrkörper 40 ausgebildeten in einem Winkel von 90° abgewinkelten Durchbrechung 46 an der eine Ecke 48 zur Verringerung des Strömungswiderstandes abgerundet ausgebildet ist, einen rechtwinklig abgewinkelten Strömungspfad von einer an dem Flansch 42 ausgebildeten Anschlussöffnung 50 zu einer an dem Flansch 44 ausgebildeten Anschlussöffnung 52 durch den Winkelkugelhahn 36. Der Flansch 42 dient zur Befestigung des Winkelkugelhahns 36 an der Außenwandung 22 des Waffenrohres 6. Die Befestigung mittels Verschraubung erfolgt derart, dass eine an der Wandung 22 ausgebildete Leitungsdurchführung 54 in das Innenrohr des Waffenrohrs 6 mit einem in dem Flansch 42 ausgebildeten Strömungspfadabschnitt 56, der den gleichen Durchmesser wie die Leitungsdurchführung 54 aufweist, fluchtet. Der Flansch 42 ist mit einem an der Leitung 24 ausgebildeten Flanschende 58 verschraubt.

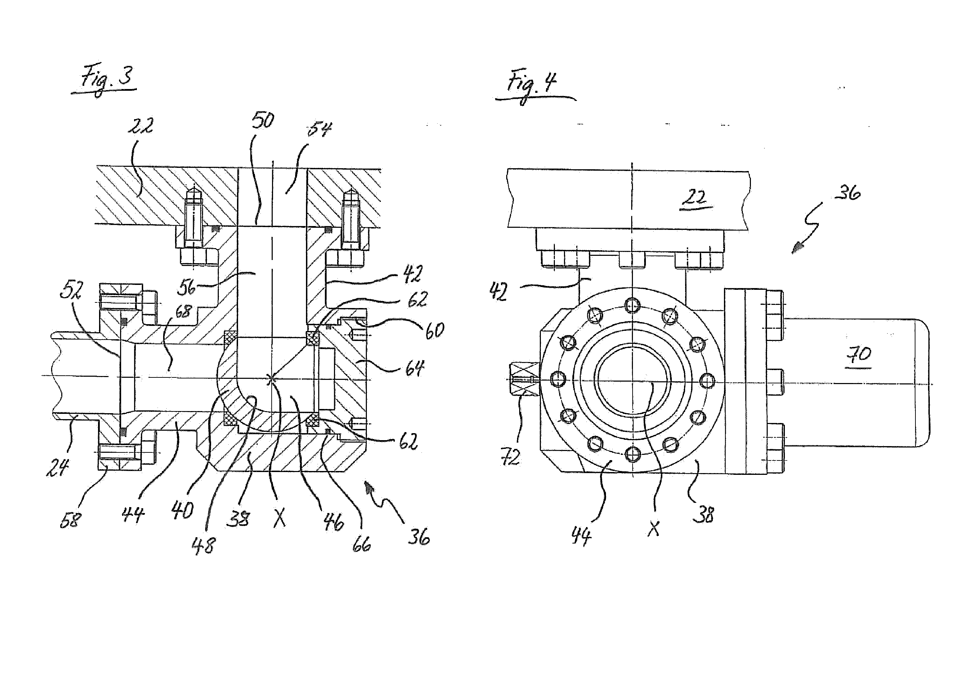

An einer von dem Flansch 44 abgewandten Außenseite des Gehäuse 38 ist eine Öffnung 60 ausgebildet, die einen Zugang zu dem Inneren des Gehäuses 38 ermöglicht, in dem der Absperrkörper 40 zwischen zwei Dicht- und Lagerschalen 62 um eine Drehachse X drehbeweglich gelagert ist. Die Öffnung 60 weist ausgehend von der Außenseite des Gehäuses 38 einen hohlzylindrischen ersten Abschnitt auf, an den sich unter Bildung eines Absatzes ein zweiter hohlzylindrischer Abschnitt mit einem geringeren Durchmesser anschließt. An der Innenseite der Öffnung 60 ist im Bereich des ersten Abschnitts ein Gewinde ausgebildet, welches zur Verschraubung eines in die Öffnung 60 eingreifenden Deckels 64 dient. Korrespondierend zu der Öffnung 60 weist der Deckel 64 einen ersten zylindrischen Abschnitt auf, dessen Durchmesser dem Innendurchmesser des ersten Abschnitts der Öffnung 60 entspricht, wobei sich an dem ersten Abschnitt des Deckels 64 ein zweiter zylindrischer Abschnitt anschließt, dessen Außendurchmesser dem Innendurchmesser des zweiten Abschnitts der Öffnung 60 entspricht. An dem Außenumfang des ersten Abschnitts des Deckels 64 ist ein Gewinde ausgebildet. Bei in der Öffnung 60 eingeschraubtem Deckel 64 übt der zweite Abschnitt des Deckels 64 einen Druck auf die Dicht- und Lagerschalen 62 aus, wodurch der Absperrkörper 40 mit einer definierten Vorspannung in dem Gehäuse 38 festgelegt wird. Zur Abdichtung des Deckels 64 gegenüber dem Gehäuse 38 ist an dem zweiten Abschnitt des Deckels 64 umfangseitig eine Nut ausgebildet, in der ein Dichtring 66 angeordnet ist. Fig. 3 zeigt den Winkelkugelhahn 36 in einer Schließstellung, in der der Absperrkörper 40 eine Strömungsverbindung von dem in dem Flansch 42 ausgebildeten Strömungspfadabschnitt 56 zu einem in dem Flansch 44 ausgebildeten Strömungspfadabschnitt 68 verhindert. Zur Schaffung einer Strömungsverbindung von dem Strömungspfadabschnitt 56 zu dem Strömungspfadabschnitt 68 ist der Absperrkörper 40 in einem Winkel von 90° um die Drehachse X zu drehen. Zu diesem Zweck sind an der Außenseite des Absperrkörpers 40 einander diametral gegenüberliegend zwei aus Fig. 3 nicht ersichtliche Wellenzapfen angeordnet. Die Anordnung der Wellenzapfen ist derart, dass ihre Mittelachsen auf der Drehachse X des Absperrkörpers 40 liegen. Die von dem Absperrkörper 40 abgewandten Enden der Wellenzapfen ragen aus dem Gehäuse 38 des Winkelkugelhahns 36 durch entsprechende Öffnungen heraus, wobei das Ende eines Wellenzapfens mit einer Antriebswelle eines an dem Gehäuse 38 angeflanschten motorischen Antriebs 70 verbunden ist und ein Ende eines Wellenzapfens 72, welches ein Vierkantprofil aufweist, zum manuellen Betätigen des Winkelkugelhahns 36 dient. Hierzu ist auf das Ende des Wellenzapfens 72 ein geeigneter Schlüssel, Hebel oder ein Handrad aufzusetzen.

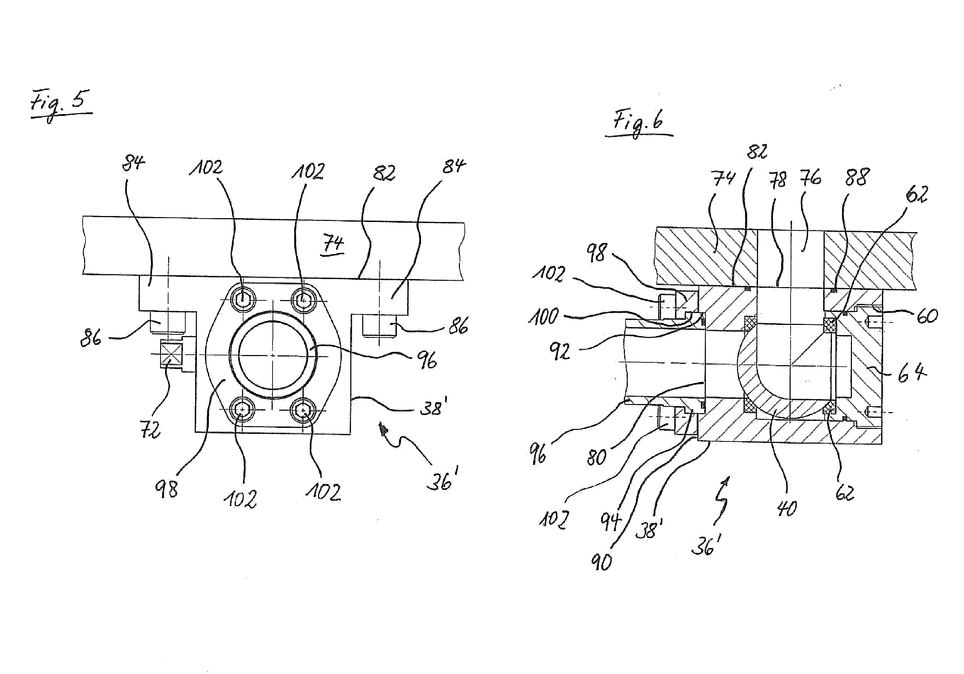

Die Figuren 5 und 6 zeigen eine besonders kompakte Ausgestaltung eines Winkelkugelhahns 36', der zum Absperren und Öffnen einer an einer Wandung 74 ausgebildeten Leitungsdurchführung 76 dient.

Bei dem Winkelkugelhahn 36' sind eine Anschlussöffnung 78 und eine Anschlussöffnung 80 direkt an einem Gehäuse 38', in welchem der Absperrkörper 40 angeordnet ist, ausgebildet. Die Anschlussöffnung 78 ist an einer Außenseite 82 des Gehäuses 38' angeordnet, die direkt an der Außenseite der Wandung 74 zur Anlage kommt. Die Außenseite 82 ist an einem Bereich des Gehäuses 38 ausgebildet, an dem an den beiden Längsseiten des Gehäuses 38' jeweils ein Vorsprung 84 ausgebildet ist, der sich über die gesamte Längsseite des Gehäuses 38' erstreckt und normal zu dieser Längsseite an dem Gehäuse 38' vorsteht (Fig. 5). Im Bereich dieser beiden Vorsprünge 84 ist das Gehäuse 38' mit der Wandung 74 mittels Schrauben 86 verschraubt. Hierbei ist die Befestigung des Gehäuses 38' an der Wandung 74 derart, dass die an dem Gehäuse 38' ausgebildete Anschlussöffnung 78, die den gleichen Querschnitt wie die an der Wandung 74 ausgebildete Leitungsdurchführung 76 aufweist, mit der Leitungsdurchführung 76 fluchtet. Um die Verbindung des Gehäuses 38' mit der Wandung 74 fluiddicht abzudichten, ist ein Dichtring 88 vorgesehen, der in einer an der Außenseite 82 des Gehäuses 38' ausgebildeten Ringnut angeordnet ist, die sich um die Anschlussöffnung 78 herum erstreckt.

Die Anschlussöffnung 80 ist an einer normal zu der Außenseite 82 ausgerichteten Außenseite 90 des Gehäuses 38' ausgebildet und zwar an einer dort ausgebildeten zylindrischen Vertiefung 92, die einen größeren Durchmesser als die Anschlussöffnung 80 aufweist. In die Vertiefung 92 greift ein flanschförmig erweitertes Ende 94 einer an den Winkelkugelhahn 36' anzuschließenden Leitung 96 ein.

Zur Befestigung der Leitung 96 an dem Gehäuse 38' ist eine Befestigungsscheibe 98 vorgesehen. An der Befestigungsscheibe 98 ist eine absatzförmige Durchbrechung 100 ausgebildet. Diese Durchbrechung 100 weist einen in Einbaulage der Befestigungsscheibe 98 an das Gehäuse 38' angrenzenden Abschnitt auf, der einen mit dem Außenquerschnitt des erweiterten Endes 94 der Leitung 96 korrespondierenden Querschnitt aufweist. Ein in Einbaulage von dem Gehäuse 38 abgewandter Abschnitt der Durchbrechung 100 weist einen mit dem Außenquerschnitt der übrigen Leitung 96 korrespondierenden Querschnitt auf. Mittels Schrauben 102 ist die Befestigungsscheibe 98 mit dem Gehäuse 38' verschraubt, wodurch das flanschförmig erweiterte Ende 94 der Leitung 96 und damit die gesamte Leitung 96 an dem Gehäuse 38' festgelegt ist.

### Bezugszeichenliste

- 2: Wandung
- 4: Druckkörper
- 6: Waffenrohr
- 8: Waffenrohr
- 10: Abschnitt
- 12: Abschnitt
- 14: Abschnitt
- 16: Abschnitt
- 18: Mündungsdeckel
- 20: Bodenverschluss
- 22: Außenwandung
- 24: Leitung
- 26: Leitung
- 28: Deck
- 30: Leitung
- 32: Leitung
- 34: Geräteschrank
- 36, 36': Winkelkugelhahn
- 38, 38': Gehäuse
- 40: Absperrkörper
- 42: Flansch
- 44: Flansch
- 46: Durchbrechung
- 48: Ecke
- 50: Anschlussöffnung
- 52: Anschlussöffnung
- 54: Leitungsdurchführung
- 56: Strömungspfadabschnitt
- 58: Flanschende
- 60: Öffnung
- 62: Dicht- und Lagerschale
- 64: Deckel
- 66: Dichtring
- 68: Strömungspfadabschnitt
- 70: Antrieb
- 72: Wellenzapfen
- 74: Wandung
- 76: Leitungsdurchführung
- 78: Anschlussöffnung
- 80: Anschlussöffnung
- 82: Außenseite
- 84: Vorsprung
- 86: Schraube
- 88: Dichtring
- 90: Außenseite
- 92: Vertiefung
- 94: Ende
- 96: Leitung
- 98: Befestigungsscheibe
- 100: Durchbrechung
- 102: Schraube
- A: Detail
- X: Drehachse

## Patentansprüche

1. Bordabsperrventil zum Absperren und Öffnen einer Leitungsdurchführung (48, 76) durch eine druckbeaufschlagte Wandung (2, 22, 74) eines Unterseeboots, **dadurch gekennzeichnet, dass** das Bordabsperrventil als Winkelkugelhahn (36, 36') ausgebildet ist.

2. Bordabsperrventil nach Anspruch 1, **dadurch gekennzeichnet, dass** ein durch den Absperrkörper (40) des Winkelkugelhahns (36, 36') führender Strömungspfad abgewinkelt ausgebildet ist.

3. Bordabsperrventil nach Anspruch 2 **dadurch gekennzeichnet, dass** die Abwinklung des Strömungspfades des Absperrkörpers (40) abgerundet ausgebildet ist.

4. Bordabsperrventil nach einem der vorangehenden Ansprüche, **dadurch gekennzeichnet, dass** zumindest eine wandungsseitig angeordneten Anschlussöffnung (50) des Winkelkugelhahns (36) an einem Flansch (42) ausgebildet ist.

5. Bordabsperrventil nach einem der vorangehenden Ansprüche, **dadurch gekennzeichnet, dass** der Winkelkugelhahn (36, 36') motorisch betätigbar ist.

6. Bordabsperrventil nach einem der vorangehenden Ansprüche, **dadurch gekennzeichnet, dass** der Absperrkörper (40) einen Wellenzapfen aufweist, über welchen der Absperrkörper (40) mit einem motorischen Antrieb (70) wirkungsverbunden ist.

7. Bordabsperrventil nach Anspruch 6, **dadurch gekennzeichnet, dass** der Absperrkörper (40) einen zweiten Wellenzapfen (72) aufweist, welcher aus dem Winkelkugelhahn (36, 36') herausgeführt ist und bei welchem der Absperrkörper (40) mit einem manuellen Betätigungsmittel verbindbar ist.

8. Bordabsperrventil nach einem der vorangehenden Ansprüche, **dadurch gekennzeichnet, dass** ein Gehäuse (38, 38') zur Aufnahme des Absperrkörpers (40) eine mit einem Gewinde versehene Öffnung (60) aufweist, in welche ein an seiner Außenseite mit einem Gewinde versehener Deckel (64) eingeschraubt ist.

9. Bordabsperrventil nach Anspruch 8, **dadurch gekennzeichnet, dass** die beiden Anschlussöffnungen (50, 52, 78, 80) des Winkelkugelhahns (36, 36') an zwei normal zueinander ausgerichteten Seiten des Gehäuses (38, 38') des Winkelkugelhahns (36, 36') ausgebildet sind.

10. Bordabsperrventil nach Anspruch 8, **dadurch gekennzeichnet, dass** eine gemeinsame Mittelachse der beiden an dem Absperrkörper (40) vorgesehen Wellenzapfen normal zu den Mittelachsen der beiden Anschlussöffnungen (50, 52, 78, 80) ausgerichtet ist.
